# EUROPÄISCHE PATENTANMELDUNG

(11) **EP 4 467 924 A1**
(43) Veröffentlichungstag der Anmeldung: **27.11.2024**
(21) Anmeldenummer: 24154974.0
(22) Anmeldetag: 31.01.2024
(51) Int. Cl.: G01B 11/25, G01B 11/02, G01B 11/06

(54) **INSPEKTIONSVORRICHTUNG FÜR BAUSTOFFE UND VERFAHREN ZUR INSPEKTION VON BAUSTOFFEN**

(30) Priorität: 25.05.2023 DE 102023113821
(71) Anmelder: Ibea Ingenieurbüro für Elektronik und Automatisation GmbH, 22525 Hamburg (DE)
(72) Erfinder: Börding, Tobias, 21435 Stelle (DE); Newger, Michael, 22397 Hamburg (DE)
(74) Vertreter: Klickow & Wetzel PartGmbB

(57) **Zusammenfassung**

Die Erfindung betrifft eine Inspektionsvorrichtung für Baustoffe und ein Verfahren zur Inspektion von Baustoffen. Erfindungsgemäß werden die Baustoffe dabei mit einer Scanvorrichtung vermessen, die während der Messung über die zu inspizierenden Baustoffe bewegt wird, oder mit einem 3D-Profilscanners mit Lichtgitterprojektion.

## Beschreibung

Die Erfindung betrifft eine Inspektionsvorrichtung für Baustoffe, aufweisend mindestens eine optische Erfassungseinheit.

Darüber hinaus betrifft die Erfindung ein Verfahren zur Inspektion von Baustoffen.

Im Anschluss an die Fertigung von Baustoffen, insbesondere von Baustoffen wie Betonsteinen, Dachziegeln, Klinkersteinen, Kalksandsteinen, Feinsteinzeug, Fliesen, Bauplatten oder Glasbausteinen, wird häufig eine Qualitätskontrolle durchgeführt, um fehlerhafte Produkte zu erkennen und ggf. auszusortieren.

Mithilfe mindestens eines Messverfahrens werden die gefertigten Produkte dabei beispielsweise im Hinblick auf ihre Masse, Maße und/oder optische Defekte, wie z.B. Risse oder Absprengungen, geprüft.

Die Produktion von Betonsteinen erfolgt in der Regel auf einem Transportbrett, auf dem die beispielsweise mithilfe einer Betonpresse gefertigten Betonsteine nebeneinander liegen. Häufig sind die Betonsteine aus einem untenliegenden Trägerbeton und einem darauf befindlichen Vorsatzbeton aufgebaut. Dabei kann es in der Produktion zu verschiedenen Fehlern kommen. Beispielsweise können durch eine schlechte Betonmischung und bereits teilweise erfolgte Abbindung des Betons Variationen in der Steinhöhe auftreten, die in Förderrichtung der Betonsteine auf dem Transportbrett sowohl quer als auch längs auftreten können. Darüber hinaus können die Betonsteine Einschlüsse aufweisen, die Färbung des Betons kann fehlerhaft sein, die Verdichtung des Betons kann unzureichend sein oder die Betonsteine können zu viel Wasser enthalten, woraus Brüche resultieren können.

Für die Qualitätskontrolle ist es daher vorteilhaft, die Inspektion der Betonsteine unmittelbar nach der Pressenfertigung durchzuführen, auch wenn das Aussortieren von fehlerhaften Steinen aufgrund der Feuchtigkeit noch nicht möglich ist.

Aus der EP 3 770 547 B1 und vielen weiteren Applikationen ist bereits bekannt, dass eine entsprechende Inspektion in einem Durchlaufverfahren erfolgen kann. Dabei wird beispielsweise eine Höhenmessung mithilfe drei Punktlasern genutzt, die an einem in Förderrichtung der Betonsteine quer und in der Höhe elektromechanisch oder manuell verstellbaren Einrichtung angebracht sind, um die Punktlaser z.B. mittig sowie jeweils links und rechts seitlich anzuordnen.

Mithilfe der bekannten Inspektionsvorrichtungen und Verfahren zur Inspektion von Baustoffen ist es jedoch nicht möglich, die reale Höhenverteilung und die Längen und Breiten der einzelnen Produkte zu erfassen.

Auch stellen die häufig engen Zwischenräume zwischen den zu inspizierenden Baustoffen ein Problem bei der Vermessung dar.

Es ist daher eine Aufgabe der Erfindung, eine verbesserte Inspektionsvorrichtung für Baustoffe zu schaffen.

Diese Aufgabe wird durcheine Inspektionsvorrichtung für Baustoffe gemäß Patentanspruch 1 gelöst.

Es ist darüber hinaus eine Aufgabe der Erfindung, ein verbessertes Verfahren zur Inspektion von Baustoffen anzugeben.

Diese Aufgabe wird erfindungsgemäß durch ein Verfahren zur Inspektion von Baustoffen gemäß Patentanspruch 9 gelöst.

In den abhängigen Patentansprüchen werden vorteilhafte Ausgestaltungen der Erfindung beansprucht.

Die nachfolgend offenbarten Merkmale einer Inspektionsvorrichtung für Baustoffe sowie eines Verfahrens zur Inspektion von Baustoffen sind in allen ausführbaren Kombinationen Bestandteil der Erfindung.

Die Inspektionsvorrichtung weist einen Inspektionsraum auf, in dem Baustoffe inspizierbar sind.

Die erfindungsgemäße Inspektionsvorrichtung für Baustoffe ist in bevorzugten Ausführungsformen zur Inspektion im Durchlaufverfahren ausgebildet. Dazu weist die Inspektionsvorrichtung in den entsprechenden Ausführungsformen eine Transportvorrichtung zur Förderung der zu inspizierenden Baustoffe in den Inspektionsraum hinein und aus diesem heraus auf. In entsprechenden Anwendungen ist die Transportvorrichtung zur Förderung der zu inspizierenden Baustoffe auf einem Transportbrett ausgebildet.

In vorteilhaften Ausführungsformen der Erfindung weist die Inspektionsvorrichtung eine Hebevorrichtung zum Anheben von Baustoffen und/oder einem Transportbrett im Inspektionsraum auf.

In stehendem Zustand lässt sich dadurch ein messtechnisch sauberer Untergrund für die nachfolgend erläuterten Messeinrichtungen schaffen und in Ausführungsformen der Erfindung eine gleichzeitige Verwiegung durchführen.

Vorzugsweise ist der Hub der Hebevorrichtung kleiner gleich 500 mm.

In Ausführungsformen der Erfindung ist die Hebevorrichtung zum Anfahren verschiedener definierter Höhen ausgebildet. Dadurch können beispielsweise Produktchargen mit verschiedenen Fertigungshöhen in den Fokus der Messvorrichtung (z.B. Kamerafokus) gehoben werden, oder - im Falle der Anwendung im Trockenbereich - kann beispielsweise in entsprechenden Ausführungsformen der Erfindung so weit angehoben werden, dass die Inspektion über einer unter dem zu inspizierenden Transportbrett durchlaufenden Produktion erfolgen kann.

Der Antrieb der Hebevorrichtung ist in Ausführungsformen der Erfindung elektromotorisch oder pneumatisch ausgestaltet.

In bevorzugten Ausführungsformen der Erfindung weist die Inspektionsvorrichtung eine Gewichtsmesseinrichtung auf, mit der das Gewicht der zu inspizierenden Baustoffe ggf. gemeinsam mit dem Transportbrett bestimmbar ist.

Eine erfindungsgemäße Inspektionsvorrichtung weist mindestens eine Höhenmesseinrichtung zur Messung der Höhe der zu inspizierenden Baustoffe auf.

In Ausführungsformen der Erfindung weist die Höhenmesseinrichtung mindestens drei Punktlaser und mindestens eine Erfassungseinrichtung auf, sodass mithilfe der Lasertriangulation die Referenzebene, beispielsweise die Oberfläche des Transportbretts, bestimmbar ist, auf der die zu inspizierenden Baustoffe im Inspektionsraum der Inspektionsvorrichtung liegen. Vorzugsweise werden Sensormodule mit jeweils einem Punktlaser und einer Erfassungseinrichtung zur Durchführung der Lasertriangulation verwendet.

Eine erfindungsgemäße Inspektionsvorrichtung weist mindestens eine Längen- und Breitenmesseinrichtung zur Bestimmung der entsprechenden Maße der zu inspizierenden Baustoffe in einer Draufsicht auf.

In Ausführungsformen der Erfindung ist die Längen- und Breitenmesseinrichtung als eine Scaneinheit realisiert. Die Scaneinheit umfasst mindestens einen Schlitten und mindestens eine Antriebseinheit, wobei am Schlitten mindestens eine Erfassungseinrichtung angeordnet ist. Mithilfe des Schlittens ist die mindestens eine Erfassungseinrichtung automatisch über die zu inspizierenden Baustoffe im Inspektionsraum bewegbar, wobei Antrieb und Schlitten zumindest zur Realisierung einer Bewegung des Schlittens quer zur Förderrichtung der Baustoffe durch den Inspektionsraum hindurch ausgebildet sind.

In Ausführungsformen der Erfindung ist der Schlitten sowohl quer als auch parallel zur Förderrichtung der Baustoffe durch den Inspektionsraum hindurch bewegbar. In diesen Ausführungsformen wird die Messung vollständig von der Transportvorrichtung entkoppelt, die die zu inspizierenden Baustoffe ggf. nicht genau genug oder nur ruckartig durch den Inspektionsraum hindurch bewegen kann. Dadurch kann es ansonsten zu Messungenauigkeiten kommen.

Die Erfassungseinrichtung ist in Ausführungsformen der Erfindung als eine optische Erfassungseinrichtung ausgebildet.

In Ausführungsformen der Erfindung ist die Scaneinheit als ein Laserscanner ausgebildet.

Die Scaneinheit umfasst in Ausführungsformen der Erfindung eine als eine 2D- oder eine 3D-Kamera ausgebildete Erfassungseinrichtung und in vorteilhaften Ausführungsformen mindestens eine der Erfassungseinrichtung zugeordnete Beleuchtungseinrichtung und/oder einen Linienlaser.

Die 2D- oder 3D-Kamera ist in Ausführungsformen der Erfindung als eine Zeilenkamera ausgebildet. In alternativen Ausführungsformen der Erfindung ist die mindestens eine Erfassungseinrichtung als eine hochauflösende 2D-Farb- oder SW-Matrix-Kamera ausgebildet. Hochauflösend bedeutet in Ausführungsformen der Erfindung eine Auflösung größer gleich etwa 64 Megapixel.

Eine 2D-Kamera dient zur optischen Prüfung der Oberfläche, Geometrie und ggf. der Farbmessung. Erfassbar sind die Länge, die Breite und die Form der zu inspizierenden Baustoffe.

Ein 3D-Messmodul erlaubt darüber hinaus die exakte Messung der Flügeligkeit / Schüsseligkeit (Verbiegung) der Produkte sowie die Detektion weiterer topographischer Defekte.

Ausführungsformen mit einer 2D-Zeilenkamera weisen vorzugsweise eine zugeordnete Zeilenlampe auf, die in einen flachen Winkel zur Kamerasichtachse angeordnet ist. Ein flacher Winkel beträgt in Ausführungsformen der Erfindung kleiner gleich 45°.

Ausführungsformen mit einer 3D-Kamera weisen vorzugsweise einen zugeordneten Linienlaser auf, der im rechten Winkel zur Oberfläche der zu inspizierenden Baustoffe angeordnet ist, wobei die 3D-Kamera in einem flachen Winkel zu diesem ausgerichtet ist.

In vorteilhaften Ausführungsformen der Erfindung ist die 3D-Kamera in einem Winkel von etwa 13 bis 27° zum Linienlaser ausgerichtet.

Eine weitere Ausgestaltung mittels 2D-Farb- oder SW-Matrixkamera ist bei hoher Auflösung möglich und weist eine Areabeleuchtung von allen 4 Seiten des Inspektionsraumes auf, welche z.B. mit LED-Weißlicht geblitzt oder kontinuierlich betrieben werden kann. Das Bild wird in entsprechenden Ausführungsformen der Erfindung dann aufgenommen, wenn das Transportbrett mittig zur Kamera ausgerichtet ist.

Die zur Bewegung des mindestens einen Schlittens der Scaneinheit ausgebildete Antriebseinheit ist in verschiedenen Ausführungsformen der Erfindung elektromotorisch oder pneumatisch realisiert.

In bevorzugten Ausführungsformen der Erfindung ist zumindest ein Teil der Höhenmesseinrichtung am Schlitten der Scaneinheit angeordnet, sodass zumindest dieser Teil der Höhenmessung während des Scannens der zu inspizierenden Baustoffe an verschiedenen Orten möglich ist. Dadurch sind im Vergleich zu ortsfest angeordneten Höhenmesseinrichtungen mit Lasertriangulation erweiterte Daten über die Höhenprofile der zu inspizierenden Baustoffe erfassbar.

Die Position und/oder Ausrichtung der Punktlaser ist in Ausführungsformen der Erfindung beispielsweise quer oder längs zur Förderrichtung elektromechanisch oder manuell verstellbar, um gewünschte Messbereiche einzustellen.

In Ausführungsformen der Erfindung sind die Punkttriangulationslaser der Höhenmesseinrichtung ortsfest in der Inspektionsvorrichtung für Baustoffe angeordnet, sodass mit diesen die Höhe der Oberfläche eines in die Inspektionsvorrichtung für Baustoffe geförderten Transportbretts als Referenzebene bestimmbar ist. Weiterhin weist die Höhenmessvorrichtung einen zumindest quer, vorzugsweise quer und parallel, zur Förderrichtung der Inspektionsvorrichtung für Baustoffe verfahrbaren Linearschlitten auf, an dem ein Linienlaser und eine 3D-Kamera angeordnet sind. Mithilfe des Laserschnittverfahrens ist so das Höhenprofil der oberen Oberfläche der zu inspizierenden Baustoffe erfassbar. Die Differenz der am jeweiligen Ort gemessenen Höhe des Baustoffes und der Höhe der Referenzebene ergibt die absolute Höhe des Baustoffes am jeweiligen Ort. Dadurch hat auch eine Schwankung der Dicke des jeweils genutzten Transportbretts - wobei +/- 5 mm üblich ist - keinen signifikanten Einfluss auf die Höhenmessung.

Die Höhe der Referenzebene wird in Ausführungsformen der Erfindung als Mittelwert aus den mindestens drei mithilfe der drei Punkttriangulationslaser gemessenen Höhen ermittelt.

In Ausführungsformen der Erfindung sind die drei Punkttriangulationslaser in einer Draufsicht auf den Ecken eines Dreiecks angeordnet, sodass diese nicht auf einer Geraden liegen. Mithilfe der drei gemessenen Höhen ist in diesen Ausführungsformen der Erfindung dadurch eine vollständige virtuelle Referenzebene bestimmbar, sodass auch ein schräg aufliegendes Transportbrett oder eine von einem Quader abweichende Form des Transportbretts kompensierbar ist. In diesen Ausführungsformen der Erfindung ergibt die Differenz der am jeweiligen Ort gemessenen Höhe des Baustoffes und der berechneten Höhe der Referenzebene am jeweiligen Ort die absolute Höhe des Baustoffes am jeweiligen Ort.

In Ausführungsformen der Erfindung ist die Höhe von Baustoffen mit einer Höhe von bis zu 500 mm mit einer Genauigkeit von +/- 0,1 mm reproduzierbar ermittelbar.

In einer besonders bevorzugten Ausführungsform der Erfindung weist die Breiten- und Längenmessvorrichtung einen 3D Profilscanner mit Lichtgitterprojektion auf.

Diese Ausführungsvariante bietet eine sehr genaue und gleichzeitige Messung aller Höhen, Längen und Breiten sowie aller Höhen- bzw. Tiefendefekte der zu inspizierenden Baustoffe.

Dazu umfasst die Breiten- und Längenmessvorrichtung mindestens einen Lichtprofilgenerator und mindestens vier zumindest zur Messung ortsfest angeordnete Kameras.

Vorzugsweise sind die Kameras derart angeordnet, dass diese von vier verschiedenen Seiten auf die zu inspizierenden Baustoffe gerichtet sind. Insbesondere ist an eine Anordnung mit jeweils um etwa 90° gedrehter Ausrichtung der Kameras gedacht.

Auch wenn, auf eine Anwendung in der Betonsteininspektion mit mehreren nebeneinander auf einem Transportbrett liegenden Betonsteinen bezogen, nicht alle Lichtgitter in alle Zwischenräume zwischen den Betonsteinen gelangen, können dennoch alle Seitenbereiche mit absoluten Höhendaten gemessen werden.

In Ausführungsformen der Erfindung ist der Lichtprofilgenerator zum Wechseln der Gitterstruktur ausgebildet. D.h. es kann von einem kleinen Raster auf ein großes Raster umgeschaltet werden und umgekehrt. In Ausführungsformen der Erfindung ist zwischen mindestens zwei verschiedenen Rastern umschaltbar.

Der Wechsel des Rasters des Lichtgitters, z.B. von kleinen auf große Gitter, erlaubt eine sehr genaue Berechnung aller Höhen. Da dies in den entsprechenden Ausführungsformen der Erfindung mit 4 Kameras von den Seiten zeitgleich erfolgt, gibt es keine Schatten und die Höhe kann von allen Seiten gemessen werden.

Im Vergleich zu Ausführungsformen mit einer Scaneinheit mit Schlitten ist in Ausführungsvarianten der Erfindung mit einem 3D-Profilscanner mit Lichtgitterprojektion keine Bewegung eines Schlittens zum Abfahren der zu inspizierenden Produkte erforderlich. Es können somit die wartungsintensiven beweglichen Teile eingespart werden. Darüber hinaus ist eine wesentlich schnellere Analyse der Baustoffe im Inspektionsraum möglich.

Diese Anwendung kann sowohl im Nassbereich - zusammen mit einer Verwiegung des Transportbretts - als auch im Trockenbereich zum Einsatz kommen. Bei der Qualitätsbeurteilung der Trockenseite wird in Ausführungsformen der Erfindung zur Aufnahme der Farben bzw. Einschlussfehlern additiv eine hochauflösende Farb- oder SW-Kamera oder eine 2D-Zeilenkamera mit Zeilenbeleuchtung verwendet.

Diese kann auch vor der Lichtgitterprojektion zur Anwendung gelangen, welche die Ergebnisse dann mit denen der Lichtgitterprojektion vereint. Dies ist vorteilhaft, da letztere an einer Stelle der Produktion platziert werden kann, an welcher das Transportbrett zum Sortieren entweder angehoben wird (z.B. zwecks darunter vorbeifahrender weiterer Produktion) oder das Transportbrett zum Sortieren angehalten wird.

In bevorzugten Ausführungsformen der Erfindung weist die Inspektionsvorrichtung eine Sortiervorrichtung zum Aussortieren von mangelhaften Produkten auf oder ist zur Verwendung mit einer Sortiervorrichtung ausgebildet.

Die Sortiervorrichtung weist in Ausführungsformen der Erfindung mindestens einen Roboter, beispielsweise einen Knickarmroboter, auf. Vorzugsweise weist der Roboter einen Sauggreifer zum Greifen der zu bewegenden Produkte auf.

In vorteilhaften Ausführungsformen der Erfindung weist die Sortiervorrichtung mindestens einen Roboter mit einer Sortiermatrix auf.

In Ausführungsformen der Erfindung ist die Inspektionsvorrichtung zur Inspektion von Betonsteinen, Dachziegeln, Klinkersteinen, Kalksandsteinen, Feinsteinzeug, Fliesen, Bauplatten und/oder Glasbausteinen ausgebildet.

In Ausführungsformen der Erfindung ist die Inspektionsvorrichtung als eine Betonsteininspektionsvorrichtung ausgebildet.

Ein erfindungsgemäßes Verfahren zur Inspektion von Baustoffen umfasst zumindest die folgenden Verfahrensschritte:
- Transport von zu inspizierenden Baustoffen in den Inspektionsraum einer Inspektionsvorrichtung,
- Bestimmung der Höhe X1 einer Referenzebene, auf der die zu inspizierenden Baustoffe aufliegen, mithilfe einer Höhenmessvorrichtung,
- Erfassung eines Höhenprofils der zu inspizierenden Baustoffe mithilfe der Höhenmessvorrichtung,
- Messung der Längen und Breiten der zu inspizierenden Baustoffe mithilfe einer Breiten- und Längenmessvorrichtung.

In Ausführungsformen der Erfindung erfolgt die Messung der Längen, Breiten und Höhen der zu inspizierenden Baustoffe mithilfe einer Scanvorrichtung, die während der Messung über die zu inspizierenden Baustoffe bewegt wird.

Dabei wird die Scanvorrichtung in Ausführungsformen der Erfindung zumindest quer zur Förderrichtung der Baustoffe durch den Inspektionsraum über die zu inspizierenden Baustoffe bewegt.

Vorzugsweise wird die Scanvorrichtung quer und parallel zur Förderrichtung der Baustoffe durch den Inspektionsraum über die zu inspizierenden Baustoffe bewegt.

In Ausführungsformen der Erfindung wird eine einheitliche Höhe X1 der Referenzebene angenommen, die vorzugsweise aus mindestens drei Höhenmessungen mithilfe von vorzugsweise drei verschiedenen Punkttriangulationslasern bestimmt wird. Besonders bevorzugt wird der Mittelwert aus den mindestens drei Messungen als einheitliche Höhe X1 der Referenzebene angenommen.

In anderen Ausführungsformen der Erfindung wird eine ortsabhängige Höhe X1 der Referenzebene bestimmt. Diese wird in Ausführungsformen der Erfindung basierend auf mindestens drei Höhenmessungen mithilfe von drei verschiedenen Punkttriangulationslasern, die in einer Draufsicht auf den Ecken eines Dreiecks angeordnet sind, bestimmt.

Die absolute Höhe der zu inspizierenden Baustoffe am jeweiligen Ort wird aus der Differenz der mithilfe der Scanvorrichtung bestimmten ortsabhängigen Höhe X2 der obenliegenden Oberfläche des Baustoffes und der Höhe X1 der Referenzebene ermittelt.

In anderen Ausführungsformen der Erfindung erfolgt die Messung der Längen und Breiten der zu inspizierenden Baustoffe mithilfe eines 3D-Profilscanners mit Lichtgitterprojektion, wobei ein Lichtgitter auf die zu inspizierenden Baustoffe projiziert wird und die Baustoffe mit dem auf diese projizierten Lichtgitter mithilfe von mindestens vier Kameras erfasst werden.

In bevorzugten Ausführungsformen des erfindungsgemäßen Verfahrens wird während der Messung das Lichtgitter in mindestens zwei verschiedenen Rastergrößen auf die Baustoffe projiziert und mit den Kameras erfasst.

In Ausführungsformen der Erfindung ist das Verfahren zur Inspektion von Betonsteinen, Dachziegeln, Klinkersteinen, Kalksandsteinen, Feinsteinzeug, Fliesen, Bauplatten und/oder Glasbausteinen ausgebildet.

In bevorzugten Ausführungsformen des erfindungsgemäßen Verfahrens werden als mangelhaft erkannte Produkte mithilfe mindestens eines Roboters aussortiert.

In besonders bevorzugten Ausführungsformen des erfindungsgemäßen Verfahrens werden als mangelhaft erkannte Produkte mithilfe mindestens eines Roboters aussortiert und durch fehlerfreie Produkte ersetzt.

In Ausführungsformen des erfindungsgemäßen Verfahrens wird eine erfindungsgemäße Inspektionsvorrichtung für Baustoffe verwendet.

In erfindungsgemäßen Ausführungsformen mit Laserscanner wird mithilfe des Laserschnittverfahrens das Höhenprofil der oberen Oberfläche der zu inspizierenden Baustoffe (z.B. Betonsteine) erfasst. Die Differenzen der Messungen für die Referenzebene (z.B. Transportbrett) und der oberen Oberfläche der Baustoffe ergeben die Baustoffhöhe, sodass eine Dickenschwankung (üblich ist bis zu +-5mm) des Transportbrettes nahezu keinen Einfluss hat. In Ausführungsformen der Erfindung können Bausteine mit einer Höhe von bis zu 500mm vermessen werden. Die Höhe der Baustoffe, z.B. der Betonsteine, kann in Ausführungsformen der Erfindung mit einer Genauigkeit von +-0,1 mm reproduzierbar ermittelt werden.

In den nachfolgend erläuterten Figuren sind beispielhafte Ausführungsformen der Erfindung dargestellt. Es zeigen:
- Figur 1:: Eine erste Ausführungsform einer Inspektionsvorrichtung für Baustoffe mit einer Scaneinheit in einer Seitenansicht in Förderrichtung der Baustoffe,
- Figur 2:: Eine Seitenansicht der Ausführungsform aus Figur 1 quer zur Förderrichtung der Baustoffe,
- Figur 3:: Eine Draufsicht auf die in den Figuren 1 und 2 gezeigte Ausführungsform,
- Figur 4:: Eine erfindungsgemäße Ausführungsform einer Inspektionsvorrichtung für Baustoffe mit einer Scaneinheit in einer Seitenansicht in Förderrichtung der Baustoffe,
- Figur 5:: Eine Detailansicht zur Veranschaulichung der Höhenmessung,
- Figur 6:: Eine zweite Ausführungsform einer Inspektionsvorrichtung für Baustoffe mit einem 3D-Profilscanner mit Lichtgitterprojektion in einer Seitenansicht in Förderrichtung der Baustoffe,
- Figur 7:: Eine Seitenansicht der Ausführungsform aus Figur 2 quer zur Förderrichtung der Baustoffe und
- Figur 8:: Eine Draufsicht auf die in den Figuren 4 und 5 gezeigte Ausführungsform einer Inspektionsvorrichtung für Baustoffe.

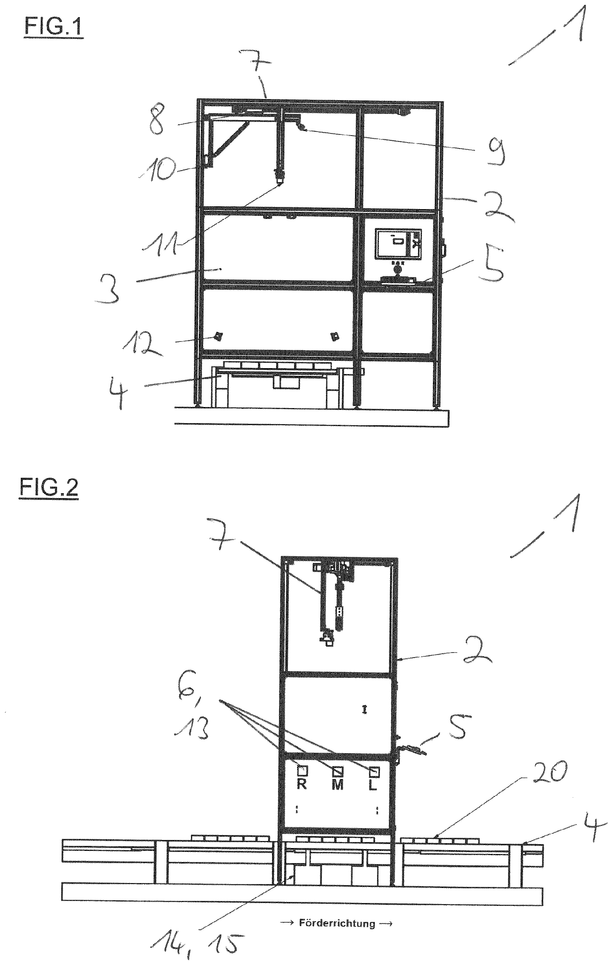

In Figur 1 ist eine erste Ausführungsform einer Inspektionsvorrichtung (1) für Baustoffe (20) mit einer Scaneinheit in einer Seitenansicht in Förderrichtung der Baustoffe (20) dargestellt.

Die Inspektionsvorrichtung (1) weist einen Rahmen (2) auf, der auch als ein Gehäuse ausgebildet sein kann. Innerhalb des Rahmens (2) befindet sich der Inspektionsraum (3) der Inspektionsvorrichtung (1).

Mithilfe der Transporteinrichtung (4) sind Baustoffe (20) zur Inspektion in den Inspektionsraum (3) hinein und aus diesem heraus transportierbar.

Zur Bedienung und dem Ablesen von Informationen weist die Inspektionsvorrichtung (1) eine Bedien- und Ausgabeeinrichtung (5) auf.

Die Breiten- und Längenmessvorrichtung (7) ist im oberen Bereich des Inspektionsraums (3) angeordnet und weist eine als ein Schlitten ausgebildete Lineareinheit (7) sowie an der Lineareinheit (7) angeordnet eine 3D-Kamera (9), ein Laserlinienlicht (10) und eine Zeilenkamera (11) auf.

Im unteren Bereich des Inspektionsraums (3) sind Beleuchtungseinrichtungen (12) angeordnet.

In Figur 2 sind die drei Punktlaser (13) der Höhenmesseinrichtung (6) erkennbar. Die Punktlaser (13) sind auf selber Höhe an drei verschiedenen Positionen (R, M, L) im Inspektionsraum (3) ortsfest angeordnet. In anderen Ausführungsformen können diese auch mit der Lineareinheit (8) beweglich sein.

Die zu inspizierenden Baustoffe (20) sind im gezeigten Beispiel Betonsteine, die auf Transportbrettern (21) liegen.

Die Inspektionsvorrichtung (1) weist in der gezeigten Ausführungsform eine Hebevorrichtung (14) und/oder eine Gewichtsmesseinrichtung (15) auf.

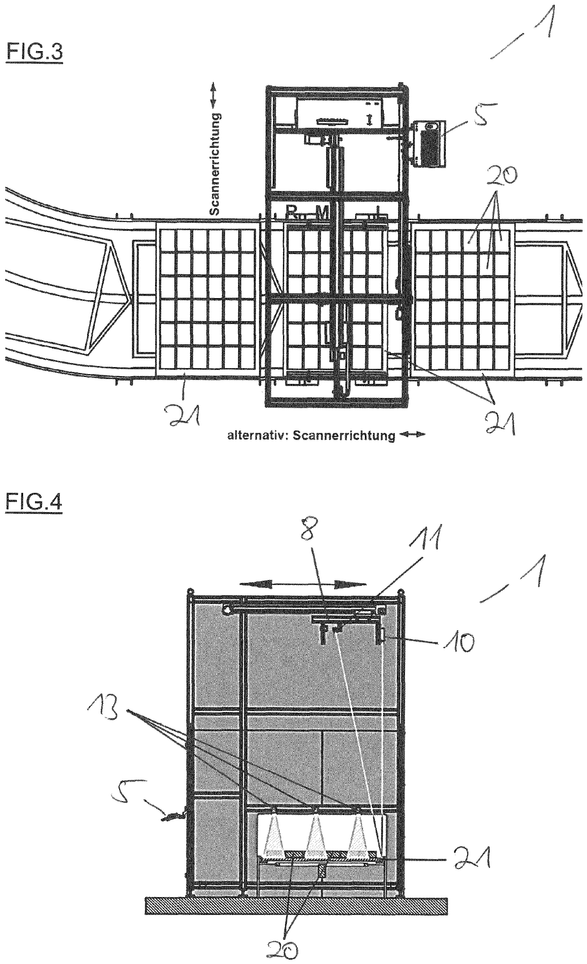

In der Draufsicht gemäß Figur 3 ist die primäre Bewegungsrichtung der Scaneinrichtung quer zur Förderrichtung der Baustoffe (20) und die optionale zweite Bewegungsrichtung parallel zur Förderrichtung eingezeichnet.

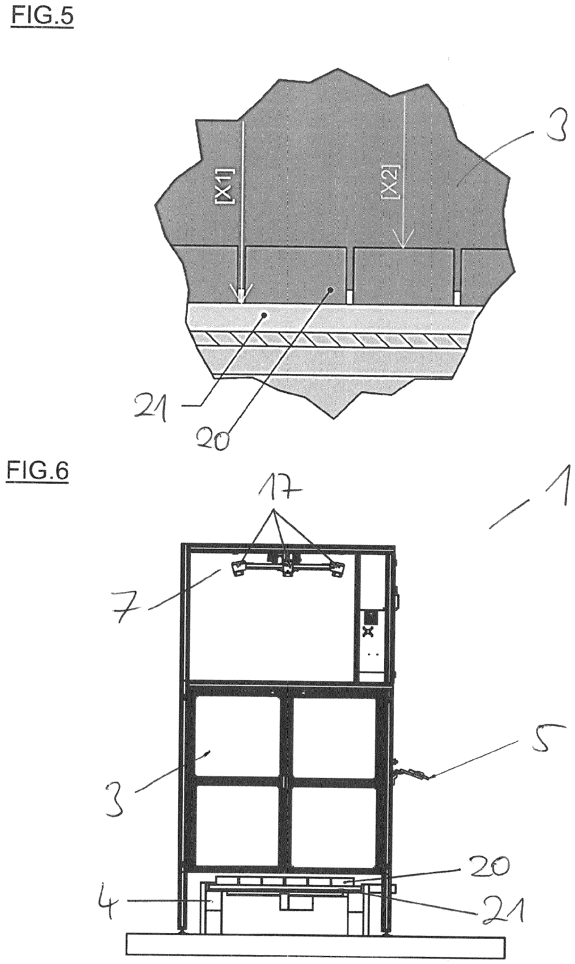

In den Figuren 4 und 5 wird die Höhenmessung gemäß bevorzugter Ausführungsformen der Erfindung veranschaulicht. Mithilfe der Punktlaser (13) wird die Höhe X1 der Oberfläche des Transportbretts (21) als Referenzebene bestimmt. Die Lineareinheit (7) weist eine 3D-Kamera (9) und einen Linienlaser (10) auf. Mit diesen wird beim Sannen der Oberfläche der zu inspizierenden Baustoffe (20) deren absolute Höhe ortsabhängig durch die Messung der Höhe X2 der obenliegenden Oberfläche der Baustoffe und das Bilden der Differenz aus X2 und X1 bestimmt.

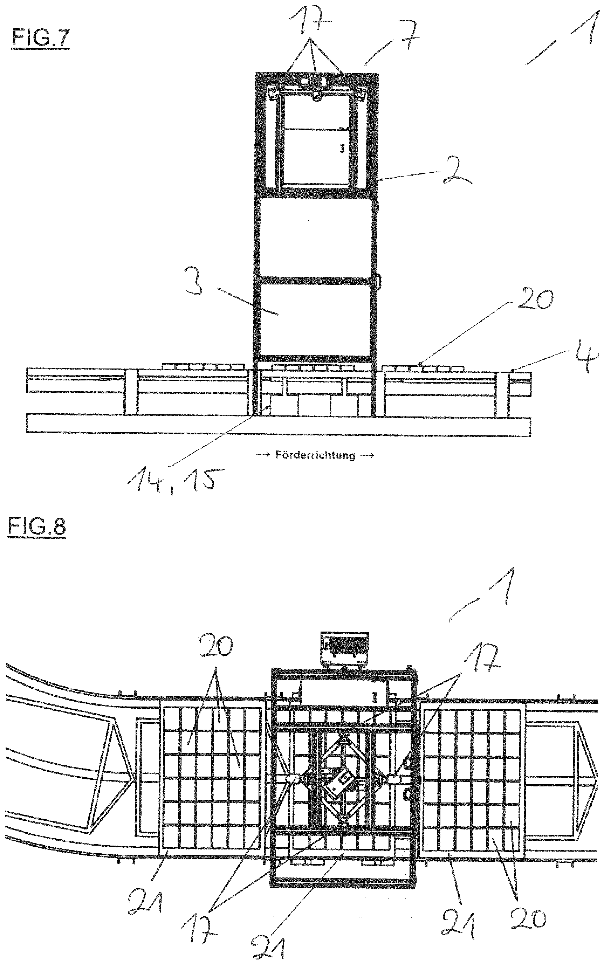

Die Figuren 6 bis 8 zeigen eine zweite Ausführungsform einer erfindungsgemäßen Inspektionsvorrichtung (1). In dieser ist die Breiten- und Längenmesseinrichtung (7) als ein 3D-Profilscanner mit Lichtgitterprojektion ausgebildet.

Die Breiten- und Längenmesseinrichtung (7) weist vier Kameras (17) und einen Lichtprofilgenerator (16) auf, die im oberen Bereich des Inspektionsraums (3) angeordnet sind.

Die Kameras (17) sind an mit jeweils um 90° zu den benachbarten Kameras (17) gedrehter Ausrichtung angeordnet und sind mit der Optik zur Erfassung nach unten ausgerichtet. Dabei sind die Kameras (17) leicht nach innen geneigt. Die Neigungen der Kameras, die Optik und die Abstände sind dem erforderlichen Bildfeld entsprechend variabel.

Zwischen den Kameras (17) ist der Lichtprofilgenerator (16) angeordnet, der zur Projektion eines Lichtgitters auf die zu inspizierenden Baustoffe (20) ausgebildet ist.

## Patentansprüche

1. Inspektionsvorrichtung (1) für Baustoffe (20), aufweisend einen Inspektionsraum (3) in den zu inspizierende Baustoffe (20) mithilfe einer Transportvorrichtung (4) transportierbar sind, wobei die Inspektionsvorrichtung (1) mindestens eine Höhenmessvorrichtung (6) und mindestens eine Breiten- und Längenmessvorrichtung (7) aufweist, **dadurch gekennzeichnet, dass** die Breiten- und Längenmessvorrichtung (7)
- eine Scaneinheit umfassend mindestens einen Schlitten und mindestens eine Antriebseinheit aufweist, wobei am Schlitten mindestens eine Erfassungseinrichtung angeordnet ist, wobei die mindestens eine Erfassungseinrichtung mithilfe des Schlittens automatisch über die zu inspizierenden Baustoffe (20) im Inspektionsraum (3) bewegbar ist und wobei Antrieb und Schlitten zumindest zur Realisierung einer Bewegung des Schlittens quer zur Förderrichtung der Baustoffe (20) durch den Inspektionsraum (3) hindurch ausgebildet sind oder
- einen 3D Profilscanner mit Lichtgitterprojektion umfasst, die mindestens einen Lichtprofilgenerator (16) und mindestens vier zumindest zur Messung ortsfest angeordnete Kameras (17) aufweist.

2. Inspektionsvorrichtung (1) nach Anspruch 1, **dadurch gekennzeichnet, dass** der Lichtprofilgenerator (16) zum Wechseln der Gitterstruktur ausgebildet ist.

3. Inspektionsvorrichtung (1) nach einem der Ansprüche 1 und 2, **dadurch gekennzeichnet, dass** die Kameras (17) mit einer zu den benachbarten Kameras (17) jeweils um etwa 90° gedrehten Ausrichtung angeordnet sind.

4. Inspektionsvorrichtung (1) nach einem der Ansprüche 1 bis 3, **dadurch gekennzeichnet, dass** der Schlitten automatisch sowohl quer als auch parallel zur Förderrichtung der Baustoffe (20) durch den Inspektionsraum (3) hindurch bewegbar ist.

5. Inspektionsvorrichtung (1) nach einem der Ansprüche 1 bis 4, **dadurch gekennzeichnet, dass** zumindest ein Teil der Höhenmesseinrichtung (6) am Schlitten der Scaneinheit angeordnet ist.

6. Inspektionsvorrichtung (1) nach einem der Ansprüche 1 bis 5, **dadurch gekennzeichnet, dass** die Höhenmesseinrichtung (6) mindestens drei Punktlaser und mindestens eine Erfassungseinrichtung aufweist.

7. Inspektionsvorrichtung (1) nach einem der Ansprüche 1 bis 6, **dadurch gekennzeichnet, dass** diese mindestens eine Gewichtsmesseinrichtung (15) aufweist.

8. Inspektionsvorrichtung (1) nach einem der Ansprüche 1 bis 7, **dadurch gekennzeichnet, dass** diese mindestens eine Hebevorrichtung (14) aufweist.

9. Verfahren zur Inspektion von Baustoffen (20) umfassend zumindest die folgenden Verfahrensschritte:
- Transport von zu inspizierenden Baustoffen (20) in den Inspektionsraum (3) einer Inspektionsvorrichtung (1),
- Bestimmung der Höhe X1 einer Referenzebene auf der die zu inspizierenden Baustoffe (20) aufliegen mithilfe einer Höhenmessvorrichtung (6),
- Erfassung eines Höhenprofils der zu inspizierenden Baustoffe (20) mithilfe der Höhenmessvorrichtung (6),
- Messung der Längen und Breiten der zu inspizierenden Baustoffe (20) mithilfe einer Breiten- und Längenmessvorrichtung (7).

10. Verfahren nach Anspruch 9, **dadurch gekennzeichnet, dass** die Messung der Längen, Breiten und Höhen der zu inspizierenden Baustoffe (20) mithilfe einer Scanvorrichtung erfolgt, die während der Messung über die zu inspizierenden Baustoffe (20) bewegt wird.

11. Verfahren nach Anspruch 9, **dadurch gekennzeichnet, dass** die Messung der Längen und Breiten der zu inspizierenden Baustoffe (20) mithilfe eines 3D-Profilscanners mit Lichtgitterprojektion erfolgt, wobei ein Lichtgitter auf die zu inspizierenden Baustoffe (20) projiziert wird und die Baustoffe (20) mit dem auf diese projizierten Lichtgitter mithilfe von mindestens vier Kameras (17) erfasst werden.

12. Verfahren nach Anspruch 11, **dadurch gekennzeichnet, dass** während der Messung das Lichtgitter in mindestens zwei verschiedenen Rastergrößen auf die Baustoffe (20) projiziert und mit den Kameras (17) erfasst wird.

13. Verfahren nach einem der Ansprüche 9 bis 12, **dadurch gekennzeichnet, dass** eine Inspektionsvorrichtung (1) für Baustoffe (20) nach einem der Ansprüche 1 bis 8 verwendet wird.
